# EUROPEAN PATENT APPLICATION

(11) **EP 4 246 924 A1**
(43) Date of publication of application: **20.09.2023**
(21) Application number: 20961387.6
(22) Date of filing: 07.12.2020
(51) Int. Cl.: H04L 61/00

(54) **BLUETOOTH ADDRESS ALLOCATION METHOD FOR SMART LAMP, COMPUTER APPARATUS, AND COMPUTER READABLE STORAGE MEDIUM**

(30) Priority: 13.11.2020 CN 202011267627
(71) Applicant: Zhuhai Ltech Technology Co., Ltd, Zhuhai, Guangdong 519060 (CN)
(72) Inventor: LEI, Jianwen, Zhuhai, Guangdong 519060 (CN); YANG, Yuexuan, Zhuhai, Guangdong 519060 (CN); HE, Zhenchao, Zhuhai, Guangdong 519060 (CN)
(74) Representative: Murgitroyd & Company
(86) International application number: PCT/CN2020/134231
(87) International publication number: WO 2022/099833

(57) **Abstract**

The present invention relates to the control field of intelligent lights, and provides a Bluetooth address allocation method for an intelligent light, a computer device and a computer-readable storage medium. The method comprises the steps: accessing a preset local area network, and setting administrators of the local area network, wherein the number of administrators is two or more; any administrator acquiring and displaying a piece of information of a peripheral Bluetooth device via a terminal device, and acquiring a piece of information of the intelligent light to which an address is to be allocated; sending a request message for allocating a Bluetooth address in the local area network to a server, and acquiring a piece of information of the Bluetooth address to be allocated, wherein the Bluetooth address to be allocated is a new Bluetooth address in the local area network; assigning the Bluetooth address to be allocated to the intelligent light to which an address is to be allocated, and sending the information of the intelligent light to which an address is to be allocated and the Bluetooth address of the intelligent light to the server. The present invention further provides the computer device and the computer-readable storage medium for implementing the method.

## Description

### Technical Field

The present invention relates to the technical field of intelligent light control, and particularly, to a Bluetooth address allocation method for an intelligent light, and a computer device and a computer-readable storage medium that are used for implementing the method.

### Background Art

With the development of smart home technologies, current domestic appliances are increasingly intelligent, and intelligent lights have become a kind of common intelligent appliances. In order to achieve intelligent control of the lights, most of existing intelligent lights integrate a wireless communication module, such as a WIFI module, a Bluetooth module, or an infrared module, and users control the intelligent lights in a wireless communication manner via terminal devices such as smart phones.

After the user purchases and installs the intelligent light, the intelligent light often does not establish a communication connection with the terminal device. Therefore, before the intelligent light is used for the first time, it is necessary to establish a wireless connection between the intelligent light and the terminal device or other network devices. Taking Bluetooth communication as an example, if the intelligent light is provided with a Bluetooth communication module, the intelligent light can communicate with the terminal device via a Bluetooth signal and receive a control instruction sent by the terminal device.

If the terminal device and the intelligent light are only connected in a one-to-one manner, only one terminal device can be used to control one intelligent light, and it is very inconvenient to control the intelligent light. Therefore, it would be convenient for the user to control the intelligent light by establishing a Bluetooth network, for example, a Bluetooth Mesh network.

In the Bluetooth Mesh network, a unicast address is used as a unique element of an identification node, namely, in the Bluetooth Mesh network, each Bluetooth device has a unique unicast address, and the communication between various devices relies on the unicast addresses for identifying the devices. Generally, in the Bluetooth Mesh network, the unicast address has a minimum value and a maximum value. For example, the unicast address starts at 0x0001 and ends at 0x7FFF, and the address is an address allocated to a Bluetooth device by a configurator at a network allocation stage of the Bluetooth Mesh device. In the Bluetooth Mesh network, the unicast address of each Bluetooth device cannot be repeated and must be incremented in a node.

Thus, one unicast address needs to be allocated to the intelligent light when the intelligent light is used for the first time. However, in a smart home system, a household is a Mesh network in most cases, there are often a plurality of family members in the household, the plurality of family members can all be administrators, and each administrator can be a Mesh configurator; if the plurality of administrators perform a network allocation operation of a Bluetooth device simultaneously, there may be duplication or confusion of unicast addresses of the intelligent lights, resulting in control disorder of the intelligent light, or even affecting the use of the intelligent lights.

### Technical Problems

A first object of the present invention is to provide a Bluetooth address allocation method for an intelligent light that effectively avoids confusion of unicast address allocation.

A second object of the present invention is to provide a computer device implementing the above-mentioned Bluetooth address allocation method for an intelligent light.

A third object of the present invention is to provide a computer-readable storage medium implementing the above-mentioned Bluetooth address allocation method for an intelligent light.

### Technical Solutions

In order to achieve the first object of the present invention, the Bluetooth address allocation method for an intelligent light provided by the present invention comprises the steps: accessing a preset local area network, and setting administrators of the local area network, wherein the number of administrators is two or more; any administrator acquiring and displaying a piece of information of a peripheral Bluetooth device via a terminal device, and acquiring a piece of information of the intelligent light to which an address is to be allocated; sending a request message for allocating a Bluetooth address in the local area network to a server, and acquiring a piece of information of a Bluetooth address to be allocated, wherein the Bluetooth address to be allocated is a new Bluetooth address in the local area network; assigning the Bluetooth address to be allocated to the intelligent light to which an address is to be allocated, and sending the information of the intelligent light to which an address is to be allocated and the Bluetooth address of the intelligent light to the server.

A preferred solution is that the acquired Bluetooth address to be allocated is unoccupied and has an address code greater than an address code of a Bluetooth device to which the address is already allocated in the local area network.

In a further solution, after receiving the request message for allocating a Bluetooth address in the local area network, the server acquires a maximum code of a Bluetooth address already used in the local area network, and acquires a next address code, which is greater than the maximum code of the Bluetooth address already used, as the Bluetooth address to be allocated.

In a still further solution, if the maximum code of the Bluetooth address already used in the local area network is a preset maximum code, an unused Bluetooth address is searched incrementally from a preset minimum code to serve as the Bluetooth address to be allocated.

In a still further solution, the method further comprises the steps: searching for a gateway device, and sending a piece of wireless account information to the gateway device; when a Bluetooth connection between the terminal device and an intelligent light is disenabled, sending a control instruction to the server, the server sending the control instruction to the gateway device, and the gateway device sending the control instruction to the intelligent light via a Bluetooth signal.

In a still further solution, if the terminal device resumes the Bluetooth connection with the intelligent light, the terminal device sends the control instruction to the intelligent light via the Bluetooth signal.

In a still further solution, the method further comprises the steps: the terminal device sending a piece of information of a preset cloud scene to the server, and the server acquiring a parameter of the preset cloud scene and sending the parameter as a control instruction to the intelligent light via the gateway device.

In a still further solution, the information of the preset cloud scene sent by the terminal device to the server comprises: a piece of scene codes information of the preset cloud scene sent by the terminal device to the server.

To achieve the above-mentioned second object, the present invention provides a computer device, comprising a processor and a memory, wherein the memory stores a computer program which implements, when being executed by the processor, the steps of the above-mentioned Bluetooth address allocation method for an intelligent light.

To achieve the above-mentioned third object, the present invention provides a computer-readable storage medium with a computer program stored therein, wherein the computer program implements, when executed by the processor, the steps of the above-mentioned Bluetooth address allocation method for an intelligent light.

### Beneficial Effects

By applying the method of the present invention, when the Bluetooth address is allocated to the intelligent light, the terminal device acquires an unused Bluetooth address to be allocated in the local area network from the server, and after the Bluetooth address to be allocated is assigned to the intelligent light, the information of the intelligent light and the information of the Bluetooth address are sent to the server, and the server records the Bluetooth address of the intelligent light. Thus, even if a plurality of administrators simultaneously set a Bluetooth address for the same intelligent light, since the server records the Bluetooth address information of the intelligent light, once the Bluetooth address is already allocated to the intelligent light, the server does not allocate a new Bluetooth address again, but directly sends the Bluetooth address allocated to the intelligent light to the terminal device, so that the problem of repeated allocation of the Bluetooth address to the intelligent light can be avoided.

Furthermore, the acquired address meets the requirement that a unicast address must be incremented in a node, meeting setup requirements of a Bluetooth Mesh network.

In addition, the server acquires next Bluetooth addresses as the Bluetooth addresses to be allocated in the order from small to large, to avoid the problem that the Bluetooth addresses of the Bluetooth device are discontinuous, thereby avoiding the problem of Bluetooth address waste.

If the currently acquired Bluetooth address to be allocated has the preset maximum code, the unused Bluetooth address is searched again starting from the preset minimum code, that is to say, middle addresses of the Bluetooth device which are omitted in allocation or already deregistered are searched, and the limited Bluetooth addresses are fully utilized.

The method of the present invention can not only control the intelligent light via the terminal device, but also control the intelligent light via gateway device, improving control convenience of the intelligent light.

In addition, the connection with the intelligent light can be switched between the terminal device and the gateway device, and the user can control the intelligent light via the terminal device or the gateway device according to demands.

Moreover, the user can set the cloud scene, and send the parameter of the cloud scene to the intelligent light via the server, so as to achieve cloud control on the intelligent light. In this way, the intelligent light can be remotely controlled even if the user is not at home, and the intelligent light is diversified in control mode.

Besides, by presetting multiple codes of the cloud scene, when cloud control is performed on the intelligent light, only scene code information of the preset cloud scene needs to be input, so that the operation of cloud control on the intelligent light is very convenient.

### Brief Description of the Drawings

FIG. 1 is a connection block diagram of a plurality of devices applied in an embodiment of a Bluetooth address allocation method for an intelligent light of the present invention.
FIG. 2 is a flowchart of the embodiment of the Bluetooth address allocation method for an intelligent light of the present invention.
FIG. 3 is a flowchart of communication switching modes in the embodiment of the Bluetooth address allocation method for an intelligent light of the present invention.
FIG. 4 is a flowchart of cloud scene control in the embodiment of the Bluetooth address allocation method for an intelligent light of the present invention.

The present invention will be further described with reference to the accompanying drawings and embodiments.

### Detailed description of the Embodiments

A Bluetooth address allocation method for an intelligent light of the present invention is applied to a terminal device and the intelligent light. The intelligent light is provided with a Bluetooth module, and the intelligent light can perform wireless communication with the terminal device or a gateway device via the Bluetooth module. Preferably, the terminal device is provided with a processor and a memory, a computer program is stored in the memory, and the processor implements the above-mentioned Bluetooth address allocation method for an intelligent light by executing the computer program.

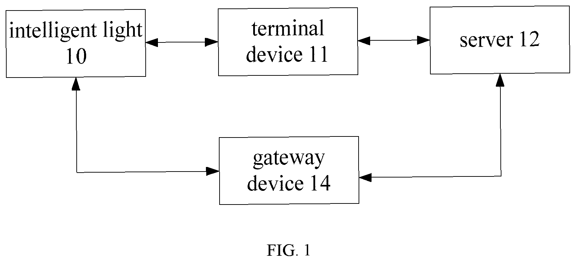

Embodiment of the Bluetooth address allocation method for an intelligent light:
This embodiment can be applied to the intelligent light and the terminal device. With reference to FIG. 1, a light-emitting module is provided in the intelligent light 10, for example, a LED chip, and a control chip and a wireless communication module are further provided in the intelligent light 10. The control chip can be a single-chip microcomputer or an integrated circuit, and the control chip is used for controlling an operation of the light-emitting module, for example, controlling a luminous brightness of the light-emitting module, whether the light-emitting module emits light, a color temperature of the light-emitting module, etc. A wireless communication module of the intelligent light 10 comprises a Bluetooth module.

The terminal device 11 may be a smart phone, a tablet computer, or the like, and a user may send a control instruction to the intelligent light 10 via the terminal device 11. Preferably, the terminal device 11 is provided with the Bluetooth module, and the terminal device 11 communicates with the intelligent light 10 via a Bluetooth signal. The terminal device 11 may also communicate with a server 12, and preferably, the terminal device 11 may communicate with the server 12 via a wireless network.

In addition, a gateway device 14 may also be provided in a home network, and the server 12 may send a control instruction to the intelligent light 10 via the gateway device 14. Preferably, the intelligent light 10 communicates with the gateway device 14 via a Bluetooth signal, and it can be seen that the intelligent light 10 can implement communications with the terminal device 11 and the gateway device 14 via the Bluetooth module.

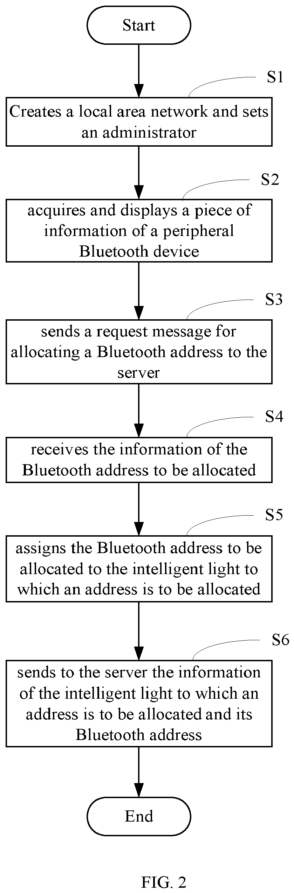

The Bluetooth address allocation method for an intelligent light is described below in conjunction with FIG. 2. First, step S1 is performed that the user creates a local area network via the terminal device and sets an administrator, for example, the user runs a preset application program by using the terminal device, wherein the application program is an application program for managing the intelligent light. After the user opens the application program, if no account is registered, an account is registered first, and when the account is registered, only a piece of information such as a mobile phone number or a mailbox can be filled in, and family information is input after the registration succeeds, wherein the registered account is associated with the family information. After the account is registered, the local area network is created. Preferably, a plurality of intelligent lights of a household, and terminal devices used by a plurality of family members form a local area network, and one or more gateway devices may also be included in the local area network. When the local area network is created, the user can set information of a plurality of administrators, that is, adding the information of a plurality of family members. Preferably, each family member uses one or more terminal devices, and adding the information of the family members is adding terminal device information of the family members to the local area network, for example, setting an ID number, a Bluetooth address and the like of the terminal device of each family member.

Then, step S2 is performed that the user searches for a peripheral Bluetooth device via the terminal device, and since the intelligent light is provided with Bluetooth module, the Bluetooth module is enabled after the intelligent light is turned on, and when the terminal device searches for the peripheral Bluetooth device via its own Bluetooth module, the peripheral Bluetooth device is scanned in a broadcasting manner, and the information of the intelligent light is acquired. After the terminal device scans and acquires a piece of information of the Bluetooth device, the scanned and acquired information of the Bluetooth device is displayed on a display screen, that is, information such as the ID number of the intelligent light and a code of the Bluetooth module.

Next, the user selects a Bluetooth device to be added via the terminal device, that is, an intelligent light to be added to the local area network, wherein the intelligent light is an intelligent light to which an address is to be allocated. Step S3 is also performed that the terminal device sends a request message for allocating a Bluetooth address to the server, and the server acquires an unused unicast address.

In this embodiment, the server records information of the unicast addresses of a plurality of Bluetooth devices in each local area network, that is, the server records whether which unicast addresses are already used and which unicast addresses are unused. In addition, the information sent by the terminal device to the server further comprises a piece of information of the local area network, and after acquiring the information of the local area network, the server searches for the unicast addresses already used in the local area network, acquires one of the unused unicast addresses as the Bluetooth address to be allocated, and sends the same to the terminal device.

Preferably, after receiving the request message for allocating the Bluetooth address, the server acquires a unicast address allocated for the last time in the local area network, and adds 1 to the unicast address allocated for the last time so as to serve as the Bluetooth address to be allocated. Since the unicast address can only be incremental in the Mesh network, the Bluetooth address to be allocated is unoccupied and has an address code greater than an address code of a Bluetooth device to which the address is already allocated in the local area network. For example, the unicast address allocated for the last time is 0x0125 in the local area network, and the unicast address is usually a unicast address with the largest address code in the local area network. Therefore, the Bluetooth address to be allocated may be 0x0126. After acquiring the Bluetooth address to be allocated, the server updates the information of the unicast address in the local area network, that is, records the unicast address allocated for the last time as 0x0126.

Of course, if the maximum code of the Bluetooth address already used in the local area network is the preset maximum code, namely, 0x7FFF, it is necessary to incrementally search for, starting from the preset minimum code, an unused Bluetooth address as the Bluetooth address to be allocated, wherein the preset minimum code is 0x0001, and therefore it is necessary to cyclically incrementally search for a unicast address of an added Bluetooth device starting from 0x0001; if it is found that a certain unicast address is not used, the unused unicast address is directly taken as the Bluetooth address to be allocated, and the unicast address is marked as a unicast address used for the last time. Since the Bluetooth device such as the registered smart light may be deregistered, the unicast address originally used by the Bluetooth device is released. However, since when the new Bluetooth device is added, only a Bluetooth address greater than the unicast addresses of all the current devices can be acquired, the unicast address released by the already deregistered device is often not be reused, resulting in a waste of address resources. Therefore, unused unicast addresses in the local area network can be fully utilized by the method described above.

After acquiring a Bluetooth address to be allocated, the server sends a piece of information of the Bluetooth address to the terminal device, and the terminal device performs step S4 of receiving the information of the Bluetooth address to be allocated, and performs step S5 of assigning the Bluetooth address to be allocated, to the intelligent light to which an address is to be allocated. Finally, the terminal device performs step S6 of sending to the server the information of the intelligent light to which an address is to be allocated as well as the information of the Bluetooth address of the intelligent light, for example, sending to the server the ID number of the intelligent light, the code of the Bluetooth module and the unicast address of the intelligent light. The server records the unicast address of the intelligent light after received the above-mentioned information. In this way, when another family member allocates a Bluetooth address to the same intelligent light, the server can determine that the intelligent light has obtained the unicast address allocated by searching for the information of the intelligent light, and sends the unicast address of the intelligent light to the terminal device, so as to avoid the problem that a Bluetooth address is repeatedly allocated to the same intelligent light, and solve the problem of Bluetooth address conflict of the intelligent light.

Since Bluetooth communication is limited to a distance between devices, that is, a distance between the terminal device and the intelligent light is excessively large, the intelligent light often cannot receive a signal sent by the terminal device, and in this case, if the user wants to control the intelligent light, it cannot be implemented via the Bluetooth signal. To this end, in this embodiment, a control instruction may also be sent to the intelligent light via the gateway device.

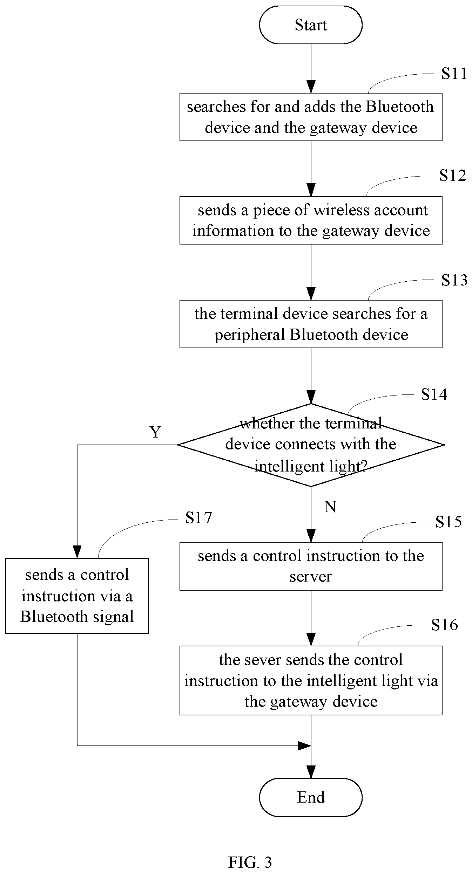

Referring to FIG. 3, the user searches for and adds the Bluetooth device and the gateway device via the terminal device, that is, perform step S 11. The Bluetooth device may be an intelligent light, and the terminal device may be connected with the gateway device via the WIFI module. Then, step S12 is performed that the terminal device sends WIFI account information of the local area network to the gateway device via a Bluetooth signal, wherein the WIFI account information comprises a WIFI account and a password, and the gateway device , after receiving the WIFI account information, is connected with a router according to the WIFI account information, and is connected with the server.

Later, step S13 is performed that the terminal device searches for a peripheral Bluetooth device, that is, searches for a peripheral intelligent light, and allocates a unicast address to the intelligent light according to the steps shown in FIG. 2. Next, step S14 is performed that whether connection with the intelligent light is established is determined, for example, when the light is used in a house and if a distance between the terminal device and the intelligent light is short, the terminal device and the intelligent light are in a Bluetooth connection state; in this case, step S17 is performed that the terminal device sends a control instruction to the intelligent light via a Bluetooth signal, for example, controls light emitting, a luminous brightness, a color temperature and the like of the intelligent light.

If the distance between the terminal device and the intelligent light is relatively large, the Bluetooth connection between the intelligent light and the terminal device is disenabled, step S15 is performed that the terminal device sends a control instruction to the server, and after the server receives the control instruction, step S16 is performed that the control instruction is sent to the intelligent light via the gateway device. When the distance between the terminal device and the intelligent light is relatively small, and after the terminal device establishes the Bluetooth connection with the intelligent light again, the terminal device sends a control instruction to the intelligent light again via a Bluetooth signal.

It can be seen that this embodiment can implement automatic switching of a Bluetooth communication between the intelligent light and the terminal device or a Bluetooth communication between the intelligent light and the gateway device, that is, implement the automatic switching of the intelligent light by means of the intelligent terminal device or remote control.

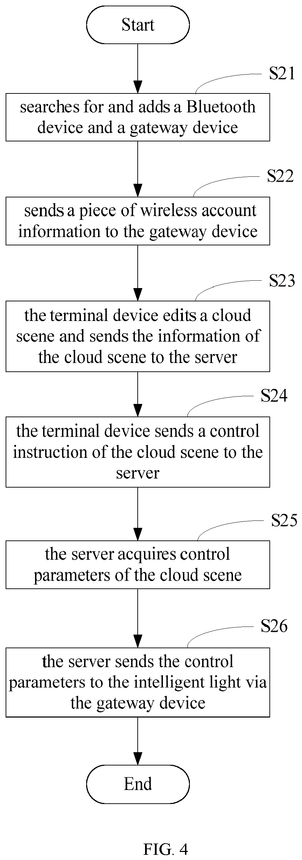

In order to enable the user to control the intelligent light more flexibly and conveniently, the user can preset a plurality of scenes, including setting a code of each scene, control parameters of the scene and the like, wherein the control parameters include the brightness, the color temperature and the like of the intelligent light. Referring to FIG. 4, the terminal device firstly performs step S21 of searching for and adding a Bluetooth device and a gateway device, performs step S22 of sending wireless account information to the gateway device, and then performs step S23 of the terminal device editing a cloud scene and sending the information of the cloud scene to the server, for example, setting a plurality of cloud scenes which each comprises its own information such as the code and the control parameters, and the server storing the information of each cloud scene after receiving the information of the cloud scene.

Next, step S24 is performed that the terminal device sends a control instruction of the cloud scene to the server, that is, the terminal device sends the code of the cloud scene to be executed to the server, and after receiving the code of the cloud scene to be executed, the server performs step S25 of acquiring control parameters of the cloud scene, including the brightness, the color temperature and the like of the intelligent light; of course, the cloud scene may also be a dynamic scene, for example, the brightness and the color temperature of the intelligent light may change over time.

Finally, step S26 is performed that the server sends the acquired control parameters to the intelligent light via the gateway device, and after receiving the control parameters, the intelligent light performs corresponding operations to control the intelligent light by the terminal device. Of course, if there are a plurality of gateway devices in the local area network, the plurality of gateway devices may each be added to the local area network during adding. In addition, at step S26, the server acquires states of the plurality of gateway devices, and if only one gateway device is online, a control instruction is directly sent via the gateway device; if the plurality of gateway devices is online simultaneously, one of the online gateway devices is selected to send the control instruction.

### Embodiment of the computer device:

The computer device of this embodiment may be an intelligent electronic device, such as a smart phone, or a tablet compute. The computer device comprises a processor, a memory, and a computer program stored in the memory and executable on the processor, wherein the processor implements, when executing the computer program, the steps of the above-mentioned Bluetooth address allocation method for an intelligent light.

For example, a computer program may be partitioned into one or more modules, and the one or more modules may be stored in the memory and executed by the processor so as to complete the modules of the present invention. One or more modules may be a series of computer program instruction segments capable of completing specific functions, which are used to describe an execution process of the computer program in a terminal device.

The processor referred to in the present invention may be a Central Processing Unit (CPU) or other general-purpose processors, a Digital Signal Processor (DSP), an Application Specific Integrated Circuit (ASIC), a Field-Programmable Gate Array (FPGA) or other programmable logic devices, a discrete gate or a transistor logic device, a discrete hardware component, etc. The general-purpose processor may be a microprocessor or the processor may be any conventional processor or the like, and the processor is a control center of the terminal device, which connects all parts of the whole terminal device with various interfaces and wires.

The memory may be used to store the computer programs and/or the modules, and the processor may implement various functions of the terminal device by running or executing the computer program and/or the modules stored in the memory and invoking data stored in the memory. The memory may mainly comprise a program storage area and a data storage area, wherein the program storage area may store an operating system, an application program required for at least one function (such as an audio playing function and an image playing function), etc. The data storage area may store data (such as audio data and a phone book) created during use of a mobile phone. In addition, the memory may comprise a high speed random access memory, and may further comprise a non-volatile memory, such as a hard disk, a memory, a plug-in hard disk, a Smart Media Card (SMC), a Secure Digital (SD) card, a Flash Card, at least one magnetic disk storage device, a flash memory device, or other volatile solid state storage devices.

### Embodiment of computer-readable storage medium:

The computer program stored in the computer device may be stored in a computer-readable storage medium if it is implemented in the form of a software functional unit and is sold or used as a separate product. On basis of such an understanding, all or part of processes of the method in the foregoing embodiments of the present invention may also be implemented by a computer program instructing relevant hardware. The computer program may be stored in a computer-readable storage medium. The computer program may implement, when executed by the processor, the steps of the above-mentioned Bluetooth address allocation method for an intelligent light.

The computer program comprises a computer program code, and the computer program code may be in the form of a source code, an object code, an executable file, or in some intermediate forms, etc. The computer-readable medium may comprise: any entity or device capable of carrying a computer program code, a recording medium, a USB flash disk, a mobile hard disk, a magnetic disk, an optical disk, a computer memory, a Read-Only Memory (ROM), a Random Access Memory (RAM), an electrical carrier signal, a telecommunications signal, a software distribution medium, etc. It should be noted that the computer-readable medium may contain content that is subject to appropriate additions and subtractions in accordance with legislative and patent practice within the jurisdiction. For example, in some jurisdictions, the computer-readable medium does not comprise electrical carrier signals and telecommunications signals in accordance with the legislative and patent practice.

Finally, it should be emphasized that the present invention is not limited to the embodiments described above. For example, changes of preset minimum and maximum values of the unicast address, a change of a type of the terminal device, or the like should also be included in the scope of protection of the claims of the present invention.

### Industrial Applicability

The method of the present invention can be applied to intelligent control on an intelligent light with a Bluetooth communication function, for example, achieving intelligent allocation of unicast addresses of the intelligent light, avoiding control disorder of the intelligent light due to a plurality of Bluetooth addresses allocated to the same intelligent light. Thus, the intelligent light can also be conveniently controlled in the case of setting a plurality of administrators at home.

In addition, the intelligent light can further automatically switch between WIFI communication and Bluetooth communication to improve the convenience of controlling the intelligent light. Furthermore, the user can further set a cloud scene of the intelligent light on a server in advance, so that the intelligent light can be remotely controlled more conveniently.

## Claims

1. A Bluetooth address allocation method for an intelligent light, comprising:
accessing a preset local area network, and setting administrators of the local area network, wherein the number of administrators is two or more;
any administrator acquiring and displaying a piece of information of a peripheral Bluetooth device via a terminal device, and acquiring a piece of information of the intelligent light to which an address is to be allocated;
sending a request message for allocating a Bluetooth address in the local area network to a server, and acquiring a piece of information of the Bluetooth address to be allocated, wherein the Bluetooth address to be allocated is a new Bluetooth address in the local area network;
assigning the Bluetooth address to be allocated to the intelligent light to which an address is to be allocated, and sending the information of the intelligent light to which an address is to be allocated and the Bluetooth address of the intelligent light to the server.

2. The Bluetooth address allocation method for an intelligent light according to claim 1, wherein
the acquired Bluetooth address to be allocated is unoccupied and has an address code greater than an address code of a Bluetooth device to which the address is already allocated in the local area network.

3. The Bluetooth address allocation method for an intelligent light according to claim 2, wherein
after receiving the request message for allocating a Bluetooth address in the local area network, the server acquires a maximum code of a Bluetooth address already used in the local area network, and acquires a next address code, which is greater than the maximum code of the Bluetooth address already used, as the Bluetooth address to be allocated.

4. The Bluetooth address allocation method for an intelligent light according to claim 3, wherein
if the maximum code of the Bluetooth address already used in the local area network is a preset maximum code, an unused Bluetooth address is searched incrementally from a preset minimum code to serve as the Bluetooth address to be allocated.

5. The Bluetooth address allocation method for an intelligent light according to any one of claims 1 to 4, wherein
the method further comprises the step: searching for a gateway device, and sending a piece of wireless account information to the gateway device; and
when a Bluetooth connection between the terminal device and an intelligent light is disenabled, sending a control instruction to the server, the server sending the control instruction to the gateway device, and the gateway device sending the control instruction to the intelligent light via a Bluetooth signal.

6. The Bluetooth address allocation method for an intelligent light according to claim 5, wherein
if the terminal device resumes the Bluetooth connection with the intelligent light, the terminal device sends the control instruction to the intelligent light via the Bluetooth signal.

7. The Bluetooth address allocation method for an intelligent light according to claim 5 or 6, wherein
the method further comprises the steps: the terminal device sending a piece of information of a preset cloud scene to the server, and the server acquiring a parameter of the preset cloud scene and sending the parameter as a control instruction to the intelligent light via the gateway device.

8. The Bluetooth address allocation method for an intelligent light according to claim 7, wherein
the information of the preset cloud scene sent by the terminal device to the server comprises: a piece of scene codes information of the preset cloud scene sent by the terminal device to the server.

9. A computer device, comprising a processor and a memory, wherein the memory stores a computer program which implements, when being executed by the processor, the steps of the above-mentioned Bluetooth address allocation method for an intelligent light according to any one of claims 1 to 8.

10. A computer-readable storage medium storing a computer program therein, wherein the computer program implements, when executed by the processor, the steps of the Bluetooth address allocation method for an intelligent light according to any one of claims 1 to 8.
